# EUROPEAN PATENT SPECIFICATION

(11) **EP 2 673 983 B1**
(45) Date of publication and mention of the grant of the patent: **04.12.2019**
(21) Application number: 12744350.5
(22) Date of filing: 09.02.2012
(51) Int. Cl.: H04W 36/00, H04W 24/10

(54) **METHODS, APPARATUSES AND COMPUTER PROGRAM PRODUCTS FOR PROVIDING AN IMPROVED HAND OVER OPERATION**
VERFAHREN, VORRICHTUNGEN UND COMPUTERPROGRAMMPRODUKTE ZUR BEREITSTELLUNG VERBESSERTER WEITERREICHUNGSOPERATIONEN
PROCÉDÉ, APPAREILS ET PRODUITS PROGRAMMES D'ORDINATEUR POUR ASSURER UNE OPÉRATION DE TRANSFERT INTERCELLULAIRE AMÉLIORÉE

(30) Priority: 10.02.2011 US 201161441522 P
(43) Date of publication of application: 18.12.2013
(73) Proprietor: Nokia Technologies Oy, 02610 Espoo (FI)
(72) Inventor: KESKITALO, Ilkka, FI-90240 Oulu (FI); KOSKELA, Jarkko, FI-90510 Oulu (FI); KOSKINEN, Jussi-Pekka, FI-90630 Oulu (FI)
(74) Representative: Ruuskanen, Juha-Pekka
(86) International application number: PCT/FI2012/050126
(87) International publication number: WO 2012/107647

(56) References cited:
- WO-A1-2008/113373
- WO-A1-2008/114183
- WO-A1-2010/052843
- WO-A1-2010/094236
- WO-A1-2011/139857
- WO-A1-2012/042114
- WO-A2-2010/151089
- US-A1- 2010 234 028
- US-A1- 2010 242 103
- NTT DOCOMO ET AL: "Necessary changes for RLF reporting enhancements", 3GPP DRAFT; 36.331_CRXXXX_(REL-10)_R2-110695_RLFREPORT , 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dublin, Ireland; 20110117, 31 January 2011 (2011-01-31), XP050493210, [retrieved on 2011-01-31]

## Description

### TECHNOLOGICAL FIELD

Embodiments of the present invention relate generally to wireless communication technology and, more particularly, relate to an apparatus, method and a computer program product for providing an efficient and reliable measurement reporting scheme in a communications network.

### BACKGROUND

The modern communications era has brought about a tremendous expansion of wireline and wireless networks. Computer networks, television networks, and telephony networks are experiencing an unprecedented technological expansion, fueled by consumer demand. Wireless and mobile networking technologies have addressed related consumer demands, while providing more flexibility and immediacy of information transfer.

Current and future networking technologies continue to facilitate ease of information transfer and convenience to users. In order to provide easier or faster information transfer and convenience, telecommunication industry service providers are developing improvements to existing networks. For instance, the evolved universal mobile telecommunications system (UMTS) terrestrial radio access network (E-UTRAN) is currently being developed. The E-UTRAN, which is also known as Long Term Evolution (LTE) or 3.9G, is aimed at upgrading prior technologies by improving efficiency, lowering costs, improving services, making use of new spectrum opportunities, and providing better integration with other open standards.

An advantage of E-UTRAN which continues to be shared with other preceding telecommunication standards is the fact that users are enabled to access a network employing such standards while remaining mobile. Thus, for example, users having mobile terminals equipped to communicate in accordance with such standards may travel vast distances while maintaining communication with the network. By providing access to users while enabling user mobility, services may be provided to users while the users remain mobile. However, the mobility of users typically requires the network to provide continuity of service to the mobile users by enabling a user's mobile terminal to be handed over between different serving stations within corresponding different cells or service areas. In order to verify and test radio network deployment and operation, drive tests have been conducted in the past. Drive testing typically involved the use of specific measurement tools that may be driven through an area to collect data for network operation verification. As such, manual testing and verification of radio network operation has been common.

For existing and particularly for newer networks (e.g., LTE, and future networks), it may be desirable to reduce the need for drive testing to reduce manual testing of networks and therefore reduce operational costs. Accordingly, studies relating to support for minimization of drive tests (MDT) are currently popular which aim to utilize commercial terminals for reporting of relevant measurement results in order to avoid separate manual testing with special test equipment and involvement of operator personnel.

For example, currently MDT measurements may provide information relating to coverage optimization and other related measurements. These coverage optimizations may correspond to data utilized in extended mobile terminal reports that may help operators minimize manual testing. The mobile terminals may report MDT measurements in an active/connected mode or in an idle mode. In the active/connected mode, the reporting of the MDT measurements may be immediate (also referred to herein as immediate MDT), corresponding to normal reporting principles for Radio Resource Management (RRM) purposes. Alternatively, in the active/connected mode, the reporting of the MDT measurements may be triggered by the occurrence of one or more events (e.g., serving cell signal strength falls below a threshold). In the idle mode, the mobile terminal may perform the MDT measurements (also referred to herein as logged MDT measurements) in instances in which immediate reporting may not be possible and the reporting of the MDT measurements may be sent by the mobile terminal to a network at a suitable time when a connection to the network is reestablished. In this regard, idle mode measurement results may be logged by the mobile terminal for subsequent reporting when a connection to the network is reestablished.

To obtain the logged MDT measurements, a mobile terminal may log available measurements in a Radio Resource Control (RRC) idle mode, together with time information, location information and radio measurements.

To obtain the immediate MDT measurements, the mobile terminal may perform MDT measurements in an RRC connected mode and may report the MDT measurements to the network at the time when a predetermined event or reporting condition is met. The immediate MDT data may include location information reported together with radio measurements. The mobile terminal may also collect cell information and measurement results for the Radio Link Failure (RLF) reports which may be sent when the next connection time has been set up. The RLF report(s) may specify a problem with a connection between the mobile terminal and the network (e.g., a serving cell). For instance, a RLF report may include information indicating that a connection between a mobile terminal and a network is lost. The log may be reported by the mobile terminal at a later stage in an RRC connected mode to a network device (e.g., a base station, a Radio Network Controller (RNC)).

In order to perform RLF reporting, a mobile terminal typically stores relevant measurement results in an instance in which the mobile terminal encounters Radio Link Failure. In this regard, a mobile terminal may store cell measurement results as well as cell identifications (IDs) at the time that the RLF occurred. For example, in an E-UTRAN, the RLF report typically includes information specifying the location where the RLF occurred. In this regard, the cell identifications may correspond to location information identifying where the RLF occurred. However, there may be a problem determining the location in which a RLF occurred in instances in which a mobile terminal is handed over from a source cell to a target cell.

For instance, at present, after a mobile terminal is handed over from a source cell to a target cell, the mobile terminal typically decodes system parameters from the target cell to obtain, for example, the cell global identity (GCI) and other relevant information about the target cell in order to determine the location of the target cell. However, the decoding of the system parameters to determine the location of the target cell may take several hundreds of milliseconds and in some cases this delay may be too long. For instance, the duration of the mobile terminal's stay in the target cell may be shorter than the time period that it takes to decode the cell global identity of the target cell. As such, the mobile terminal may not have sufficient time to read and decode system parameters or the system information received from the target cell may fail due to weak radio conditions. Accordingly, the mobile terminal may be unable to identify the cell global identity of the target cell. In this regard, in an instance in which the mobile terminal may detect a Radio Link Failure in the target cell, after being handed over from a source cell, for example, the mobile terminal may be unable to generate the RLF report to be sent to the target cell since the mobile terminal may not know the location where the RLF occurred. The mobile terminal may not know the location where the RLF occurred due to being unable to determine the cell global identity of the target cell.

It should be pointed out that physical cell identifiers (PCIs) may be insufficient to determine the location where a RLF occurred since a PCI(s) may not uniquely identify a particular cell. This is because the PCIs are typically re-used in a network due to the limited number of PCI values. In this regard, there may be multiple cells with the same PCI.

Another problem may exist in an instance in which a mobile terminal obtains logged MDT measurements that are stored for reporting to a cell. In this regard, configuration information may be provided to the mobile terminal by a network device of a source/serving cell instructing the mobile terminal to log MDT measurements in the cell for a registered public land mobile network (RPLMN) of the source/serving cell. Once the mobile terminal logs the measurements, the mobile terminal may store the logged MDT measurements on behalf of the RPLMN and the RPLMN may request the logged MDT measurements from the mobile terminal.

Prior to the RPLMN requesting the logged MDT measurements from the mobile terminal, the source/serving cell may hand over the mobile terminal to a target cell. As such, the mobile terminal may desire to make the logged MDT measurements available to a PLMN of the target cell since the RPLMN did not request the logged MDT measurements, for example. However, in order to verify the PLMN of the target cell, the mobile terminal typically needs to know the PLMN identifier (ID) of the target cell. The PLMN of the target cell is typically determined from the global cell identity of the target cell. As described above, the cell global identity of the target cell is generally decoded from system parameters received from the target cell and it may take a significant amount of time for the mobile terminal to decode the cell global identify resulting in a delay. Moreover, if the duration of the mobile terminal in the target cell is short or the connection is weak, for example, the mobile terminal may be unable to decode the cell global identity and thus may be unable to obtain the PLMN ID of the target cell. As a consequence, the mobile terminal may be unable to indicate to the PLMN of the target cell that logged MDT measurements are available, or the mobile terminal may not know whether it is allowed to send the measurement log.

Another problem may arise as a result of handover failure. For instance, in order for a source cell to successfully handover a mobile terminal to a target cell there is typically a handover time period in which the mobile terminal must indicate to the target cell that it has completed a connection reconfiguration related to received handover parameters. If this time period expires, before the mobile terminal confirms that it completed the connection reconfiguration related to the received handover parameters, the handover may fail. In an instance in which the handover fails, the mobile terminal may be unable to report the handover failure to the target cell since the mobile terminal may not know the cell global identity of the target cell. The mobile terminal may not know the cell global identity of the target cell since the mobile terminal may be unable to decode system information received in the handover parameters before the expiration of the handover time period in order to obtain the cell global identity of the target cell.

In view of the foregoing problems, it may be beneficial to provide a mechanism in which to ensure that the location and identity of a cell is provided to a mobile terminal in order to facilitate reporting of failures, measurements and any other suitable data in a reliable and efficient manner.

International patent application publication number WO 2008/113373 A1 relates to enabling a handover to be performed, based on a determination by a mobile terminal reported cell-Id.

International patent application publication number WO 2010/094236 A1 relates to methods for detecting and reporting a radio network problem.

NTT DOCOMO ET AL: "Necessary changes for RLF reporting enhancements", R2-110695, 3GPP draft is a change request for a communication specification relating to enhancements for radio link failure related measurement reports and handling.

International patent application publication number WO 2008/114183 A1 relates to an apparatus for facilitating handover failure recovery that may include a handover management element configured to receive, at a target node, a handover request from a source node regarding the handover of communications with a mobile terminal.

### BRIEF SUMMARY

The present invention is defined by the appended independent claims. Certain more specific aspects are defined by the dependent claims.

A method, apparatus and computer program product are therefore provided that may facilitate extension of a handover command to include a global cell identifier(s) (e.g., a cell global identity (CGI), an E-UTRAN CGI (E-CGI), etc.) of a target cell. In this regard, a user terminal of an example embodiment may be informed about the unique cell identities of one or more cells that the user terminal may be handed over to or connected.

According to an example embodiment, the global cell identifier(s) corresponding to a target cell may be provided to the user terminal in the handover command by a source cell. By including the global cell identifier of a target cell in a handover command, the problems caused by the delay in decoding the cell identifies may be solved. In this regard, the global cell identifier may be utilized to ensure that Radio Link Failures and/or handover failures are properly reported to a network. Additionally, the global cell identifier may be utilized to identify a PLMN of a target cell that a user terminal may have moved to. In this regard, the user terminal may determine whether the PLMN of the target cell is a registered PLMN and in an instance in which the user terminal may determine that the PLMN of the target cell is a registered PLMN, the user terminal may indicate that logged MDT measurements are available for the target cell.

The Radio Link Failure reporting of an example embodiment may support a Self Optimizing/Organizing Network (SON) Mobility Robustness Optimization (MRO) and an example embodiment may solve a problem of the RLF reporting supporting MRO by providing one or more cell global identifiers to a user terminal which may be utilized to indicate the occurrence of a RLF. In this regard, a user terminal of an example embodiment may include data in a RLF report indicating the location of the RFL failure to ensure proper MRO.

In one example embodiment, a method for providing management of measurement and/or failure reporting is provided. The method may include receiving a handover command message, from a source cell, indicating an identity of a target cell in response to a decision to handover an apparatus from the source cell to the target cell. The method may further include enabling provision of at least one generated report to the target cell based in part on analyzing data associated with the identity of the target cell.

In another example embodiment, an apparatus for providing management of measurement and/or failure reporting is provided. The apparatus may include at least one processor and at least one memory storing computer program code configured to, with the at least one processor, cause the apparatus to receive a handover command message, from a source cell, indicating an identity of a target cell in response to a decision to handover the apparatus from the source cell to the target cell. The at least one memory and the computer program code are further configured to, with the processor, cause the apparatus to enable provision of at least one generated report to the target cell based at least in part on analyzing data associated with the identity of the target cell.

In another example embodiment, a computer program product for providing management of measurement and/or failure reporting is provided. The computer program product includes at least one computer-readable storage medium having computer-executable program code instructions stored therein. The computer-executable program code instructions may include program code instructions for enabling receipt of a handover command message, from a source cell, indicating an identity of a target cell in response to a decision to handover an apparatus from the source cell to the target cell. The program code instructions configured to enable provision of at least one generated report to the target cell based at least in part on analyzing data associated with the identity of the target cell.

In another example embodiment, an apparatus for providing management of measurement and/or failure reporting is provided. The apparatus may include means for receiving a handover command message, from a source cell, indicating an identity of a target cell in response to a decision to handover the apparatus from the source cell to the target cell. The apparatus may also include means for enabling provision of at least one generated report to the target cell based in part on analyzing data associated with the identity of the target cell.

In another example embodiment, a method for providing management of measurement and/or failure reporting is provided. The method may include receiving an identity of a target cell from an apparatus of the target cell. The method may further include generating a handover command message including data indicating an identity of the target cell in response to a decision to handover a device from a source cell to the target cell. The method may further include enabling provision of the handover command message to the device to enable the device to provide at least one generated report to the target cell based at least in part on analyzing data associated with the identity of the target cell.

In another example embodiment, an apparatus for providing management of measurement and/or failure reporting is provided. The apparatus may include at least one processor and at least one memory storing computer program code configured to, with the at least one processor, cause the apparatus to receive an identity of a target cell from another apparatus of the target cell. The at least one memory and the computer program code are further configured to, with the processor, cause the apparatus to generate a handover command message including data indicating the identity of the target cell in response to a decision to handover a device from a source cell to the target cell. The at least one memory and the computer program code are further configured to, with the processor, cause the apparatus to enable provision of the handover command message to the device to enable the device to provide a generated report(s) to the target cell based at least in part on analyzing data associated with the identity of the target cell.

In another example embodiment, a computer program product for providing management of measurement and/or failure reporting is provided. The computer program product includes at least one computer-readable storage medium having computer-executable program code instructions stored therein. The computer-executable program code instructions may include program code instructions configured to enable receipt of an identity of a target cell from an apparatus of the target cell. The program code instructions may be configured to generate a handover command message including data indicating the identity of the target cell in response to a decision to handover a device from a source cell to the target cell. The program code instructions may also be configured to enable provision of the handover command message to the device to enable the device to provide at least one generated report to the target cell based at least in part on analyzing data associated with the identity of the target cell.

In another example embodiment, an apparatus for providing management of measurement and/or failure reporting is provided. The apparatus may include means for receiving an identity of a target cell from another apparatus of the target cell. The apparatus may also include means for generating a handover command message including data indicating an identity of the target cell in response to a decision to handover a device from a source cell to the target cell. The apparatus may also include means for enabling provision of the handover command message to the device to enable the device to provide at least one generated report to the target cell based at least in part on analyzing data associated with the identity of the target cell.

An example embodiment of the invention may therefore provide a more reliable and efficient manner for a network to obtain measurement reports as well as failure reports to enable improved capabilities with respect to telecommunications services.

### BRIEF DESCRIPTION OF THE SEVERAL VIEWS OF THE DRAWINGS

Having thus described the invention in general terms, reference will now be made to the accompanying drawings, which are not necessarily drawn to scale, and wherein:
FIG. 1 is a schematic block diagram of a wireless communications system according to an example embodiment of the invention;
FIG. 2 is a schematic diagram of a system for providing management of measurement and/or failure reporting according to an example embodiment of the invention;
FIG. 3 is a block diagram of an apparatus for providing management of measurement and/or failure reporting in a user terminal according to an example embodiment of the invention;
FIG. 4 is a block diagram of an apparatus embodied at a network device for providing management of measurement and/or failure reporting according to an example embodiment of the invention;
FIGS. 5A & 5B are diagrams illustrating failure scenarios according to an example embodiment of the invention;
FIG. 6 is a control flow diagram illustrating a mechanism for providing management of measurement and/or failure reporting according to an example embodiment of the invention;
FIG. 7 is a flowchart according to an example method for providing management of measurement and/or failure reporting according to example embodiment of the invention;
FIG. 8 is another flowchart according to an example method for facilitating management of measurement and/or failure reporting according to an example embodiment of the invention; and
FIG. 9 is another flowchart according to an example method for facilitating management of measurement and/or failure reporting according to an example embodiment of the invention.

### DETAILED DESCRIPTION

Some embodiments of the present invention will now be described more fully hereinafter with reference to the accompanying drawings, in which some, but not all embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information" and similar terms may be used interchangeably to refer to data capable of being transmitted, received and/or stored in accordance with embodiments of the present invention. Thus, use of any such terms should not be taken to limit the scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

As defined herein a "computer-readable storage medium," which refers to a non-transitory, physical storage medium (e.g., volatile or non- volatile memory device), can be differentiated from a "computer-readable transmission medium," which refers to an electromagnetic signal.

As referred to herein, Radio Link Failure may be a condition in which a radio communication path(s), channel(s), system(s) or the like is unable to transfer or successfully perform data transmission or communication processes within desired parameters (e.g., excessive transmission delay, excessive error conditions, loss of connectivity with a network, etc). The Radio Link Failure may, but need not, be detected by a communication device based on the expiration of a transmission timer(s), by counting one or more packets or any other suitable manner.

As referred to herein, the term "location", "location(s)" and similar terms may, but need not, be used to refer to a global cell identifier or global cell identification of a cell.

An example embodiment of the invention may relate to the management of measurement reporting responsive to a cell change between different cells. In this regard, for example, for a mobile terminal that may be directed to provide or may be currently logging measurement information (e.g., for RLF reporting) when a handover occurs between different cells for any reason, an example embodiment of the invention may enable the provision of instructions for handling such a situation. MDT measurement reporting may typically be done via radio resource control (RRC) signaling. For a mobile terminal that is in an active or connected mode, the reporting can be either immediate, corresponding to normal reporting principles for radio resource management purposes, or may be delayed such that, for example, reporting is delayed until a particular event trigger initiates a stored report to be sent (e.g., when in idle mode, reports may be stored and sent when a connection is set up in the future). The measurements reported may include data gathered by the mobile terminal as the mobile terminal moves throughout one or more cells for use in assessing network coverage or capacity, optimizing mobility parameters and other coverage or capacity related performance criteria, including but not limited to Radio Link Failure reports, handover (HO) failure reports, etc. Accordingly, as referred to herein, MDT reports (or measurement reports) should be understood to correspond to any reports that may be provided from a mobile terminal to one or more network devices to assist the network in managing or at least becoming aware of network coverage and capacity characteristics experienced at various locations in the network at which reporting devices are positioned.

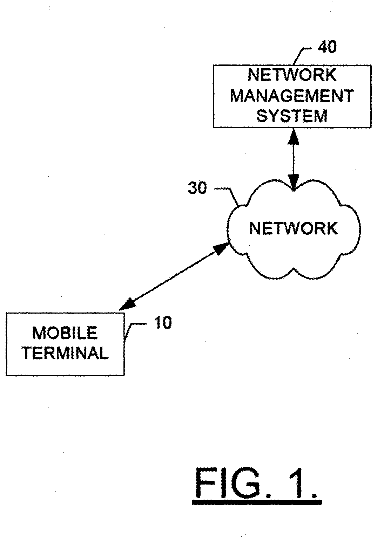

FIG. 1 illustrates a generic system diagram in which a device such as a mobile terminal 10, which may benefit from embodiments of the present invention, is shown in an example communication environment. As shown in FIG. 1, a system in accordance with an example embodiment of the present invention includes a communication device (e.g., mobile terminal 10) that may be capable of communication with a network 30. The mobile terminal 10 may be an example of one of several communications devices of the system that may be able to communicate with network devices or with each other via the network 30. In some cases, various aspects of operation of the network 30 may be managed by one or more network devices. As an example, the network 30 may include a network management system 40, which may be involved with (perhaps among other things) performing network management functions.

While several embodiments of the mobile terminal 10 may be illustrated and hereinafter described for purposes of example, other types of mobile terminals, such as portable digital assistants (PDAs), pagers, mobile televisions, mobile telephones, gaming devices, laptop computers, cameras, camera phones, video recorders, audio/video player, radio, GPS devices, navigation devices, or any combination of the aforementioned, and other types of voice and text communications systems, can readily employ embodiments of the present invention.

In an example embodiment, the network 30 includes a collection of various different nodes, devices or functions that are capable of communication with each other via corresponding wired and/or wireless interfaces. As such, the illustration of FIG. 1 should be understood to be an example of a broad view of certain elements of the system and not an all inclusive or detailed view of the system or the network 30. Although not necessary, in some embodiments, the network 30 may be capable of supporting communication in accordance with any one or more of a number of first-generation (1G), second-generation (2G), 2.5G, third-generation (3G), 3.5G, 3.9G, fourth-generation (4G) mobile communication protocols, Long Term Evolution (LTE) or Evolved Universal Terrestrial Radio Access Network (E-UTRAN), Self Optimizing/Organizing Network (SON) intra-LTE, inter-Radio Access Technology (RAT) Network and/or the like.

One or more communication terminals such as the mobile terminal 10 and other communication devices may be capable of communication with each other via the network 30 and each may include an antenna or antennas for transmitting signals to and for receiving signals from a base site, which could be, for example a base station that is a part of one or more cellular or mobile networks or an access point that may be coupled to a data network, such as a local area network (LAN), a metropolitan area network (MAN), and/or a wide area network (WAN), such as the Internet. In turn, other devices such as processing devices or elements (e.g., personal computers, server computers or the like) may be coupled to the mobile terminal 10 and the other communication devices via the network 30. By directly or indirectly connecting the mobile terminal 10 and the other communication devices to the network 30, the mobile terminal 10 and the other communication devices may be enabled to communicate with network devices and/or each other, for example, according to numerous communication protocols including Hypertext Transfer Protocol (HTTP) and/or the like, to thereby carry out various communication or other functions of the mobile terminal 10 and the other communication devices, respectively.

Furthermore, although not shown in FIG. 1, the mobile terminal 10 may communicate in accordance with, for example, radio frequency (RF), Bluetooth (BT), Infrared (IR) or any of a number of different wireline or wireless communication techniques, including LAN, wireless LAN (WLAN), Worldwide Interoperability for Microwave Access (WiMAX), WiFi, ultra-wide band (UWB), Wibree techniques and/or the like. As such, the mobile terminal 10 may be enabled to communicate with the network 30 and other devices by any of numerous different access mechanisms. For example, mobile access mechanisms such as wideband code division multiple access (W-CDMA), CDMA2000, global system for mobile communications (GSM), general packet radio service (GPRS) and/or the like may be supported as well as wireless access mechanisms such as WLAN, WiMAX, and/or the like and fixed access mechanisms such as digital subscriber line (DSL), cable modems, Ethernet and/or the like.

In an example embodiment, the network management system 40 may be a device, node or collection of devices and nodes such as a server, computer or other network device. The network management system 40 may have any number of functions or associations with various services. As such, for example, the network management system 40 may be a platform such as a dedicated server (or server bank) associated with a particular information source or service (e.g., network management services), or the network management system 40 may be a backend server associated with one or more other functions or services. As such, the network management system 40 represents a potential host for a plurality of different network management services. In some embodiments, the functionality of the network management system 40 is provided by hardware and/or software components configured to operate in accordance with known techniques for the provision of network management services to the network 30. However, at least some of the functionality provided by the network management system 40 may be provided in accordance with example embodiments of the invention.

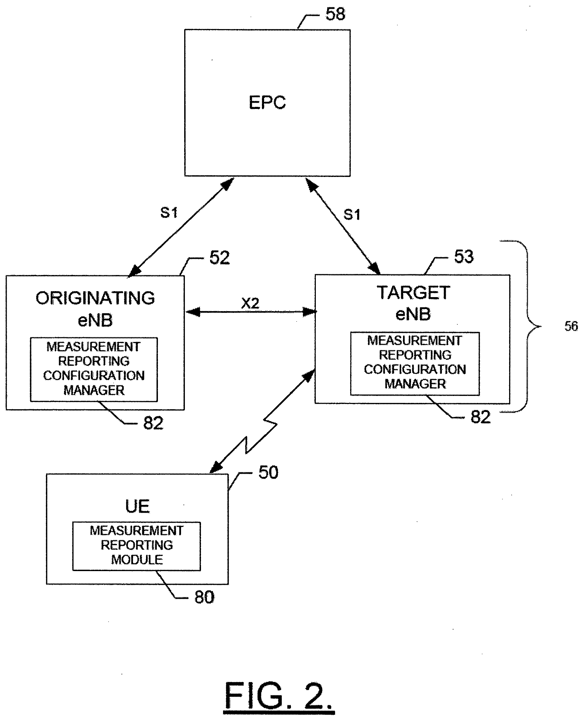

An example embodiment of the invention will now be described with reference to FIG. 2, in which certain elements of a system for providing management of measurement reporting after cell change are displayed. The system of FIG. 2 represents a specific embodiment of a network such as the general network displayed in FIG. 1, except that FIG. 2 represents a general block diagram of an E-UTRAN. As such, in connection with FIG. 2, user equipment (UE) 50 may be an example of one embodiment of the mobile terminal 10 of FIG. 1 and eNBs (E-UTRAN node Bs) 52 and 53 may be examples of base stations or access points that may serve respective cells or areas within the network 30 to, together with other eNBs, define the coverage provided by the network 30 to mobile users. However, it should be noted that the system of FIG. 2, may also be employed in connection with a variety of other devices, both mobile and fixed, and therefore, embodiments of the present invention should not be limited to application on devices such as the mobile terminal 10 of FIG. 1 or the network devices of FIG. 2. Moreover FIG. 2, which illustrates E-UTRAN components, should be understood to be just an example of one type of network with which embodiments of the present invention may be employed. However, other example embodiments may be practiced in similar fashion with respect to UTRAN or even other networks.

Referring now to FIG. 2, the system includes an E-UTRAN 56 which may include, among other things, a plurality of node-Bs in communication with an evolved packet core (EPC) 58 which may include one or more mobility management entities (MMEs) (not shown) and one or more system architecture evolution (SAE) gateways (not shown). The node-Bs may be E-UTRAN node-Bs (e.g., eNBs such as originating eNB 52 and target eNB 53) and may also be in communication with the UE 50 and other UEs. The E-UTRAN 56 may be in communication with the EPC 58. In an example embodiment, the network management system 40 of FIG. 1 may be an example of a device or collection of devices within the EPC 58 that may be configured to employ an example embodiment of the present invention. Each of the eNBs 52 and 53 may communicate with each other via an eNB to eNB interface such as, for example, an X2 interface. As referred to herein, an X2 interface may be a physical and/or logical interface between eNBs to facilitate communications between the eNBs. Additionally or alternatively, each of the eNBs 52 and 53 may communicate with each other via an SI interface in which each eNB may send a message to the EPC 58. The EPC (also referred to herein as core network) may send the message to a corresponding eNB via an SI interface. The SI interface may be a physical and/or logical interface between eNBs and the EPC. In this regard, the eNBs and the EPC may communicate via the SI interface. In an example embodiment of the invention, the eNBs 52 and 53 may exchange data such as, for example, one or more cell identifiers including but not limited to, cell global identifiers (CGIs), E-UTRAN cell global identifiers (E-CGIs) and the like between each other via an X2 interface. The cell identifiers may identify a cell and its corresponding location. For example, a cell identifier sent by the eNB 52 to the eNB 53 may indicate a source cell of the eNB 52 and a cell identifier sent by the eNB 53 to the eNB 52 may indicate a target cell of the eNB 53. It should be pointed out the eNBs 52 and 53 may exchange cell identifiers between each other via the SI interface in a manner analogous to that described above without departing from the scope of the invention.

In some embodiments, instances of a measurement reporting configuration manager 82 may be present at each of the eNBs 52 and 53 to control continuity of measurements associated with MDT as described in greater detail below. However, it should be appreciated that in some embodiments, rather than employing instances of the measurement reporting configuration manager 82 at each respective eNB, the EPC 58 may employ an instance of the measurement reporting configuration manager 82 and direct operations of the eNBs accordingly.

The eNBs 52 and 53 may provide E-UTRA user plane and control plane (radio resource control (RRC)) protocol terminations for the UE 50. The eNBs 52 and 53 may provide functionality hosting for such functions as radio resource management, radio bearer control, radio admission control, connection mobility control, dynamic allocation of resources to UEs in both uplink and downlink, selection of an MME at UE attachment, IP header compression and encryption, scheduling of paging and broadcast information, routing of data, measurement and measurement reporting for configuration mobility, and the like.

The MME may host functions such as distribution of messages to respective node-Bs, security control, idle state mobility control, EPS (Evolved Packet System) bearer control, ciphering and integrity protection of (non access stratum) NAS signaling, and the like. The SAE gateway may host functions such as termination and switching of certain packets for paging and support of UE mobility. In an example embodiment, the EPC 58 may provide connection to a network such as the Internet. As shown in FIG. 2, the eNBs 52 and 53 may each include a measurement reporting configuration manager 82 configured to execute functions associated with each corresponding eNB with respect to receiving information from and/or providing information to the UE 50, the EPC 58 and/or other eNBs related to, for example, communication format parameters and/or measurement parameters related to MDT, as well as generation of one or more RLF reports, handover failure reports and any other suitable reports.

In an example embodiment, the system of FIG. 2 may include one or more public land mobile networks (PLMNs) coupled to one or more other data or communication networks - notably a wide area network (WAN) such as the Internet. Each of the PLMNs may include a core network backbone such as the EPC 58. Each of the core networks and the Internet may be coupled to one or more radio access networks, air interfaces or the like that implement one or more radio access technologies. The radio access networks may each include one or more base stations (e.g., eNBs 52 or 53), access points or the like, each of which may serve a coverage area divided into one or more cells. In some cases, eNBs 52 and 53 may be associated with the same PLMN or equivalent PLMNs. In such cases, any MDT measurement reporting provided to either eNB may still be useful to the corresponding PLMN. However, in a situation where a handover occurs between access points or base stations that are associated with different PLMNs, it still may be desirable for MDT measurements that are made or logged for one PLMN to be provided to the other and different PLMN.

In situations where idle mode logging and reporting of MDT measurements are to be provided, the serving network typically configures MDT measurement logging for a selected UE (e.g., UE 50) during an active connection. Thus, when the UE 50 goes into the idle state, the measurement reporting module 80 of the UE 50 may begin MDT measurement logging. Other triggers may also be employed to initiate MDT measurement logging by the measurement reporting module 80 of the UE 50 according to configuration data provided by the network. Generally, the UE 50 may stop logging if a duration specified by the configuration is reached or if the memory space utilized for logging (e.g., the log) is full. Otherwise, logging may continue while the UE 50 is roaming and is in a "camped normally" state. In some cases, the log may be cleared when the PLMN is changed (e.g., when a cell change occurs to a PLMN that is outside a list of equivalent PLMNs). In an instance in which the UE 50 enters the connected state from the idle state where logging has occurred, the UE 50 may indicate (repeatedly in some instances) the availability of the MDT measurement logged data via messages such as, for example, RRCConnectionSetupComplete, RRCConnectionReestablishmentComplete, RRCConnectionReconfigurationComplete, and/or the like. When receiving the indication of the availability of the MDT measurement logged data, the network may at any suitable time request that the UE provide the MDT measurement logged data to the network. After providing the MDT measurement logged data to the network, the UE 50 may be enabled to clear the log.

A report of MDT measurement logged data after a cell change between different PLMNs may need some form of handling to ensure that the UE 50 may report the MDT measurement logged data to a different PLMN. In some situations, there may be a delay after a handover of the UE 50 between two eNBs (e.g., between eNB 52 and eNB 53) before the UE 50 receives information identifying the PLMN associated with the eNB to which the handover was conducted. As such, for example, if the originating eNB 52 is associated with a first PLMN that directed the UE 50 to record MDT measurements and the target eNB 53 is associated with a second and different PLMN, it may take some time before the UE 50 is aware that the target eNB 53 is associated with the second PLMN. Thus, the UE 50 may otherwise include a log indication in one of the messages listed above (e.g., the RRCConnectionReconfigurationComplete). The log indication may inform the second PLMN that the UE 50 has logged MDT measurement data (although it is data logged for a different PLMN, namely the first PLMN) and may request that the UE 50 report the logged MDT measurement data. In this regard, the identity of the second PLMN is typically not signaled during handover execution, but the identity of the second PLMN may be read from system information broadcasted by the target cell. The reading of the system information to determine the identity of the second PLMN may take several hundreds of milliseconds in some cases and this delay may be too late for the UE 50 to determine whether to send the report to the second PLMN. The UE 50 may have information available to it (e.g., in the access stratum layer) to indicate the equivalent PLMNs identifiers corresponding to the identifier of the PLMN that configured the UE 50 for MDT measurement reporting. In an example embodiment, the equivalent PLMNs identifiers may, but need not, be included in a list. However, there may be situations where the UE 50 may not know the PLMN when a MDT configuration is received such as, for example, when the UE has performed a handover to a cell that configures the MDT after which it possibly moves forward in the network before reading the system information and thus obtaining the PLMN of the configuring cell. An example embodiment of the invention may therefore attempt to ensure that the UE 50 receives the PLMN identification (ID) of the second PLMN in time to determine whether to report logged MDT measurements to the second PLMN if a request for a report is received after handover, as described more fully below.

Additionally, the measurement reporting module 80 of the UE 50 may detect a Radio Link Failure between the UE 50 and the target eNB 53 after a handover attempt. For instance, in an instance in which the originating eNB 52 hands over the UE 50 to the target eNB 53, the measurement reporting module 80 of the UE 50 may detect a Radio Link Failure between the UE 50 and the target eNB 53 in response to determining that the UE 50 and the target eNB 53 are no longer connected, for example. When the UE 50 detects a Radio Link Failure, the UE 50 may aim to generate a Radio Link Failure report including data indicating where the RLF occurred, and/or identifying the cell preceding the last successful handover, for usage by the network. However, due to the delay associated with reading the system information broadcast from the target cell to decode the cell identity of the target cell, the UE 50 may be unable to generate the Radio Link Failure report in a timely fashion. For instance, the UE 50 may possibly be moved forward in the network before reading the system information and decoding the identity and location of the target cell (e.g., the cell where the RLF occurred in this example). In this regard, an example embodiment of the invention may therefore provide a mechanism to ensure that the UE 50 receives the cell identification of the target cell in time to report the occurrence of the RLF, as described more fully below.

Additionally or alternatively, the measurement reporting module 80 of the UE 50 may report a handover failure in response to determining that a handover attempt failed. For example, a source cell of the originating eNB 52 may send a handover request to a target cell in order to handover the UE 50 from the originating eNB 52 to the target eNB 53 of the target cell. In this regard, the originating eNB 52 may send the UE 50 one or more handover parameters. In an instance in which the UE 50 does not utilize the handover parameters to complete a connection reconfiguration before the expiration of a predetermined time period (also referred to herein as handover time period) the handover may fail.

In this regard, the measurement reporting module 80 of the UE 50 may aim to generate a handover failure report to be sent to the target cell. However, because of the delay associated with the time it may take to decode the identify of the target cell based on system information that may be included in the handover parameters, the measurement reporting module 80 of the UE 50 may be unable to generate and report the handover failure to the target cell by decoding the identity of the target cell. An example embodiment of the invention may therefore provide a mechanism to ensure that the UE 50 receives the cell identification of the target cell in time in order to report the handover failure to the target cell, as described more fully below. In an alternative example embodiment, the handover failure report may be included in a RLF report.

It should be noted that the terms "originating" and "target" are merely used herein to refer to roles that any eNB may play at various different times in relation to being a source (e.g., originating) cell initially providing service to a UE or a neighboring or destination or (e.g., target) cell to which service is to be transferred to, for example, the UE moving from the source cell to the neighboring or destination cell. Thus, the terms "originating" and "target" could be applicable to the same eNB at various different times and such terms are not meant to be limiting in any way.

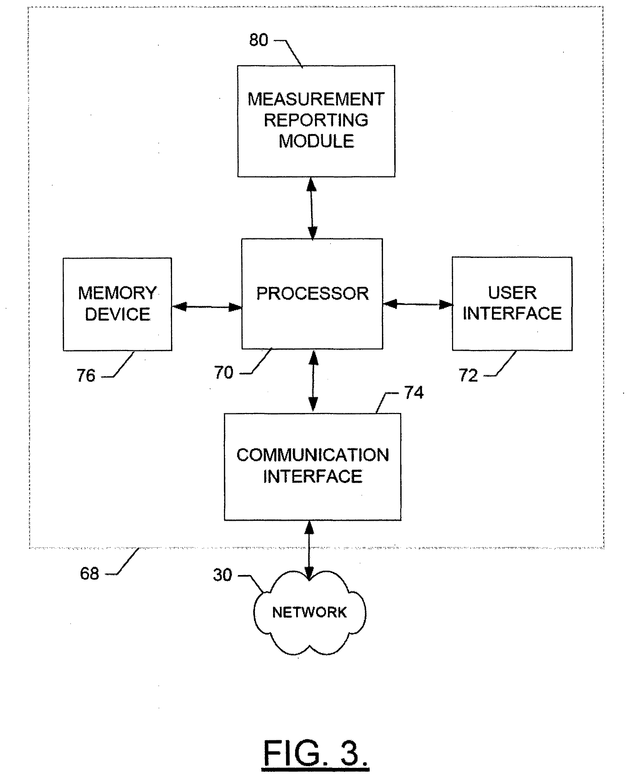

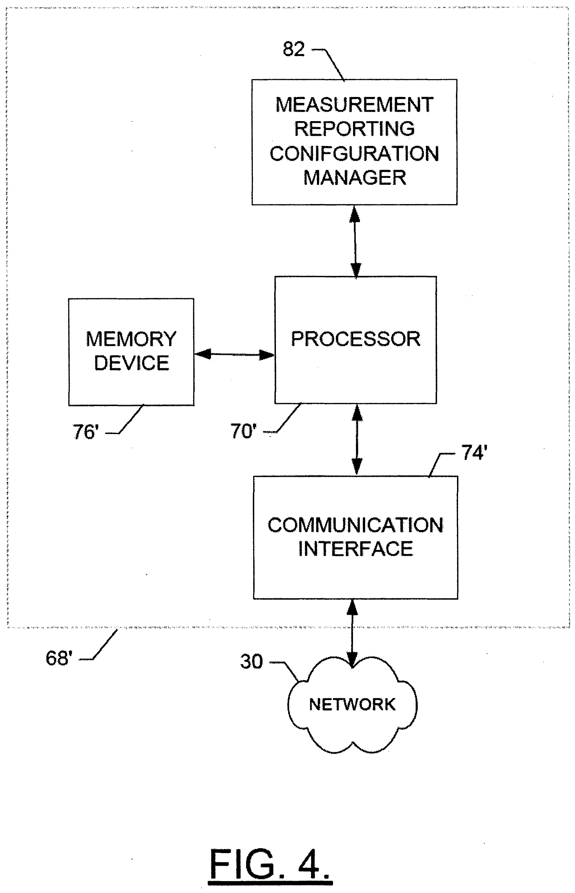

FIGS. 3 and 4 illustrate block diagrams of apparatuses for providing management of measurement and/or failure reporting responsive to a cell change between different cells. The apparatus of FIG. 3 may be employed, for example, on the mobile terminal 10. Meanwhile, the apparatus of FIG. 4 may be employed, for example, on the network management system 40 or on the eNBs 52 and 53. However, the apparatus may alternatively be embodied at a variety of other devices. In some cases, embodiments may be employed on either one or a combination of devices. Furthermore, it should be noted that the devices or elements described below may not be mandatory and thus some may be omitted in certain embodiments.

Referring now to FIG. 3, an apparatus 68 for providing management of measurement reporting responsive to a cell change between different PLMNs is provided. The apparatus 68 may include or otherwise be in communication with a processor 70, a user interface 72, a communication interface 74 and a memory device 76. In some embodiments, the processor 70 (and/or co-processors or any other processing circuitry assisting or otherwise associated with the processor 70) may be in communication with the memory device 76 via a bus for passing information among components of the apparatus 68. The memory device 76 may include, for example, one or more volatile and/or non-volatile memories. In other words, for example, the memory device 76 may be an electronic storage device (e.g., a computer readable storage medium) comprising gates configured to store data (e.g., bits) that may be retrievable by a machine (e.g., a computing device like the processor 70). The memory device 76 may be configured to store information, data, applications, instructions or the like for enabling the apparatus to carry out various functions in accordance with an example embodiment of the present invention. For example, the memory device 76 could be configured to buffer input data for processing by the processor 70. Additionally or alternatively, the memory device 76 could be configured to store instructions for execution by the processor 70.

The apparatus 68 may, in some embodiments, be a mobile terminal (e.g., mobile terminal 10) or a fixed communication device or computing device configured to employ an example embodiment of the invention. However, in an example embodiment, the apparatus 68 may be embodied as a chip or chip set. In other words, the apparatus 68 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus 68 may therefore, in some cases, be configured to implement an embodiment of the present invention on a single chip or as a single "system on a chip." As such, in some cases, a chip or chipset may constitute means for performing one or more operations for providing the functionalities described herein.

The processor 70 may be embodied in a number of different ways. For example, the processor 70 may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor 70 may include one or more processing cores configured to perform independently. A multi-core processor may enable multiprocessing within a single physical package. Additionally or alternatively, the processor 70 may include one or more processors configured in tandem via the bus to enable independent execution of instructions, pipelining and/or multithreading.

In an example embodiment, the processor 70 may be configured to execute instructions stored in the memory device 76 or otherwise accessible to the processor 70. Alternatively or additionally, the processor 70 may be configured to execute hard coded functionality. As such, whether configured by hardware or software methods, or by a combination thereof, the processor 70 may represent an entity (e.g., physically embodied in circuitry) capable of performing operations according to an embodiment of the invention while configured accordingly. Thus, for example, when the processor 70 is embodied as an ASIC, FPGA or the like, the processor 70 may be specifically configured hardware for conducting the operations described herein. Alternatively, as another example, when the processor 70 is embodied as an executor of software instructions, the instructions may specifically configure the processor 70 to perform the algorithms and/or operations described herein when the instructions are executed. However, in some cases, the processor 70 may be a processor of a specific device (e.g., a mobile terminal or network device) adapted for employing an embodiment of the invention by further configuration of the processor 70 by instructions for performing the algorithms and/or operations described herein. The processor 70 may include, among other things, a clock, an arithmetic logic unit (ALU) and logic gates configured to support operation of the processor 70.

Meanwhile, the communication interface 74 may be any means such as a device or circuitry embodied in either hardware or a combination of hardware and software that is configured to receive and/or transmit data from/to a network and/or any other device or module in communication with the apparatus 50. In this regard, the communication interface 74 may include, for example, an antenna (or multiple antennas) and supporting hardware and/or software for enabling communications with a wireless communication network. In some environments, the communication interface 74 may alternatively or also support wired communication. As such, for example, the communication interface 74 may include a communication modem and/or other hardware/software for supporting communication via cable, digital subscriber line (DSL), universal serial bus (USB) or other mechanisms.

The user interface 72 may be in communication with the processor 70 to receive an indication of a user input at the user interface 72 and/or to provide an audible, visual, mechanical or other output to the user. As such, the user interface 72 may include, for example, a keyboard, a mouse, a joystick, a display, a touch screen, soft keys, a microphone, a speaker, or other input/output mechanisms. In this regard, for example, the processor 70 may comprise user interface circuitry configured to control at least some functions of one or more elements of the user interface, such as, for example, a speaker, ringer, microphone, display, and/or the like. The processor 70 and/or user interface circuitry comprising the processor 70 may be configured to control one or more functions of one or more elements of the user interface through computer program instructions (e.g., software and/or firmware) stored on a memory accessible to the processor 70 (e.g., memory device 76, and/or the like).

In an example embodiment, the processor 70 may be embodied as, include or otherwise control the measurement reporting module 80. As such, in some embodiments, the processor 70 may be said to cause, direct or control the execution or occurrence of the various functions attributed to the measurement reporting module 80, as described herein. The measurement reporting module 80 may be any means such as a device or circuitry operating in accordance with software or otherwise embodied in hardware or a combination of hardware and software (e.g., processor 70 operating under software control, the processor 70 embodied as an ASIC or FPGA specifically configured to perform the operations described herein, or a combination thereof) thereby configuring the device or circuitry to perform the corresponding functions of the measurement reporting module 80, as described herein. Thus, in examples in which software is employed, a device or circuitry (e.g., the processor 70 in one example) executing the software forms the structure associated with such means.

The measurement reporting module 80 may be configured to handle the instructions provided to the UE 50 with respect to maintaining measurement reports (e.g., logged MDT measurement data, immediate MDT measurement data) as well as failure reports (e.g., RLF reports, handover failure reports) responsive to a cell handover. The instructions may be provided to the UE 50 by an eNB (e.g., eNB 52) of a source/serving cell. In an example embodiment, the measurement reporting module 80 may be configured to receive information indicative of the identity and/or location of a cell(s) (e.g., a target cell), in response to a source cell determining that the UE 50 should be handed over to a target cell. The identity and/or location of the cell(s) (e.g., target cell) may be sent by the measurement reporting configuration manager 82 of an eNB (e.g., eNB 52) of a source cell to the UE 50. The eNB of the source cell may receive the identity and/or location of the cell(s) (e.g., target cell) via an X2 interface from an eNB (e.g., eNB 53) of a target cell. Alternatively, the eNB of the source cell may receive the identity and/or location of the cell(s) (e.g., target cell) via an S1 interface indirectly from an eNB (e.g., eNB 53) of a target cell via the EPC 58. In an example embodiment, the identity of the cell (also referred to herein as global cell identifier (ID)) may include, but is not limited to, a Cell Global Identity (CGI), E-UTRAN CGI (E-CGI), or the like.

The global cell identifier (e.g. CGI, E-CGI, etc.) may be a unique identifier of a cell site in cellular network(s) (e.g., E-UTRAN, UTRAN, etc.). The global cell identifier may include data (e.g., a location identity code) indicating a location of a corresponding cell in a cellular network. Additionally or alternatively, in an example embodiment, the global cell identifier may identify a country (e.g., Mobile Country Code (MMC) = 310), a corresponding network (e.g., mobile network code (MNC) = 380), a corresponding PLMN(s), a location area code (LAC) (e.g., LAC = 34512), a specific cell (e.g., cell identifier = 23411) or sector, and any other suitable data corresponding to a cell(s).

In an example embodiment, the global cell identifier may be received by the measurement reporting module 80 of the UE 50 from an eNB (e.g., eNB 52) of the source cell in a message (e.g., a handover command message) such as, for example, a RRCConnectionReconfiguration (also referred to herein as RRC Conn. Reconf) message. By receiving the global cell identifier in a handover command message, the measurement reporting module 80 of the UE 50 may determine the identity and location of a corresponding target cell without having to rely on reading system parameters from a source cell before the expiration of a time period in order to decode the identity of the target cell. In response to the measurement reporting module 80 detecting the occurrence of a Radio Link Failure after a handover attempt, the measurement reporting module 80 of the UE 50 may be able to analyze the global cell identifier received in the handover command message to determine the location where the Radio Link Failure occurred. Additionally, in an instance in which the measurement reporting module 80 of the UE 50 determined a handover attempt with a target cell failed, the measurement reporting module 80 may be able to analyze the global cell identifier received in a handover command message to determine the identity and/or location of the target cell. In this regard, the measurement reporting module 80 may generate a handover failure report that may be available for one or more cells (e.g., the source cell maintaining eNB 52, the target cell maintaining eNB 53) in the network. The handover failure report, generated by the measurement reporting module 80 may indicate the target cell in which the handover failed.

Additionally, by analyzing the data associated with a global cell identifier received in a handover command message, the measurement reporting module 80 of the UE 80 may analyze the data associated with the global cell identifier and may determine an identifier of a PLMN of the target cell. In this regard, the measurement reporting module 80 may enable logged MDT measurement data, previously obtained in a source cell, available to the PLMN of a target cell (e.g., the PLMN of the target eNB 53) after successful completion of handover to the target cell. The measurement reporting module 80 may enable logged MDT measurement data to be available to the PLMN of a target cell in response to determining that the PLMN of the target cell is equivalent to a PLMN of a source cell by analyzing data in a list of PLMNs.

As indicated above, FIG. 4 illustrates a block diagram of an apparatus 68' for providing management of measurement and/or failure reporting responsive to a cell change between different cells from the perspective of a network entity. The apparatus 68' may be employed, for example, on the eNBs 52, 53. In an alternative example embodiment, the apparatus 68' may be employed, for example, on the network management system 40. The apparatus 68' may include several components similar to those of the apparatus 68 of FIG. 3. In this regard, for example, the apparatus 68' may include components such as a processor 70', a memory device 76' and a communication interface 74' as shown in the example of FIG. 4. The processor 70', the memory device 76' and the communication interface 74' may have similar structural characteristics and functional capabilities to the processor 70, memory device 76 and communication interface 74 of FIG. 3 except perhaps as to scale and semantic differences. Accordingly, a detailed description of these components will not be provided.

In an example embodiment, the apparatus 68' may further include a measurement reporting configuration manager 82. In some cases, the processor 70' may be embodied as, include or otherwise control the measurement reporting configuration manager 82. As such, in some embodiments, the processor 70' may be said to cause, direct or control the execution or occurrence of the various functions attributed to the measurement reporting configuration manager 82, as described herein. The measurement reporting configuration manager 82 may be any means such as a device or circuitry operating in accordance with software or otherwise embodied in hardware or a combination of hardware and software (e.g., processor 70' operating under software control, the processor 70' embodied as an ASIC or FPGA specifically configured to perform the operations described herein, or a combination thereof) thereby configuring the device or circuitry to perform the corresponding functions of the measurement reporting configuration manager 82, as described herein. Thus, in examples in which software is employed, a device or circuitry (e.g., the processor 70' in one example) executing the software forms the structure associated with such means.

The measurement reporting configuration manager 82 may be configured to provide instructions to the UE 50 (e.g., to the measurement reporting module 80) with respect to the maintaining of measurement reports (e.g., logged MDT measurement data) and/or failure reports responsive to a cell handover. In some embodiments, the measurement reporting configuration manager 82 may be configured to provide configuration information to the measurement reporting module 80 to define rules identifying the conditions under which the measurement reporting module 80 is permitted or directed to report MDT measurement logged data. In an example embodiment, the measurement reporting configuration manager 82 may be configured to receive a global cell identifier from a target cell via an X2 interface or an S1 interface from an eNB (e.g., target eNB 53). In response to determining that the UE 50 should be handed over from a source cell to a target cell, the measurement reporting configuration manager 82 may generate a handover command message (e.g., an RRCConnectionReconfiguration message) and may include a global cell identifier of the target cell along with mobility information and any other suitable information in the handover command message.

The measurement reporting configuration module 82 may send the handover command message to the measurement reporting module 80 of the UE 50. The UE 50 may analyze data associated with the global cell identifier (e.g., CGI, E-CGI, etc.) in the handover command message in order to generate one or more RLF reports, handover failure reports as well as to identify a PLMN of the target cell to enable logged MDT measurement data to be available for the PLMN of the target cell, in a manner analogous to that described above.

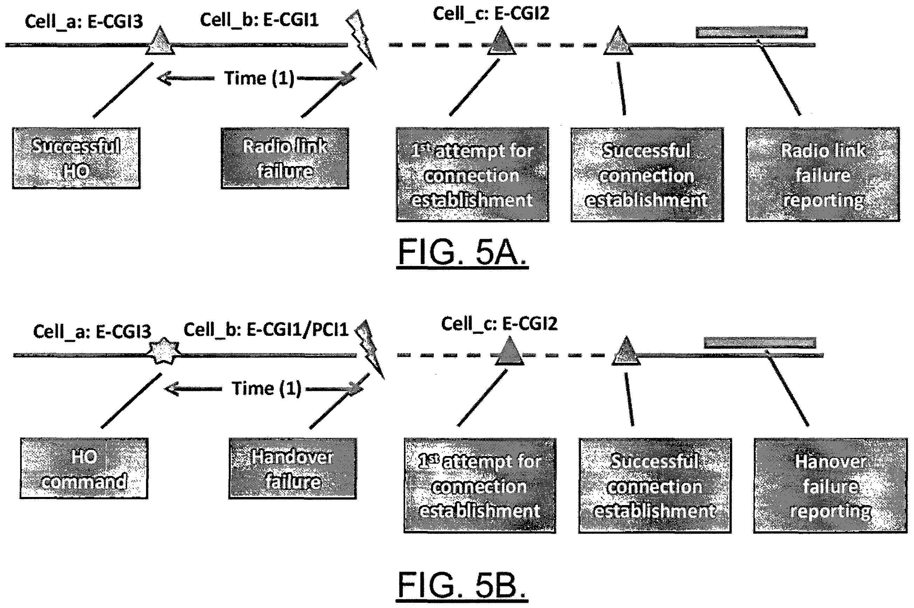

FIGS. 5A & 5B, illustrate diagrams related to failure scenarios according to an example embodiment of the invention. In an example embodiment, the failure scenarios of FIGS. 5A and 5B may relate to SON mobility robustness optimizations. The example embodiment of FIG. 5A may relate to a Radio Link Failure. In this regard, in response to receipt of a handover command message to handover a UE (e.g., UE 50) from a source cell (e.g., Cell_a) to a target cell (e.g., Cell_b), the UE may send a confirmation message indicating that the handover is successful. The handover command message provided by the source cell (e.g., Cell_a) to the UE may include the global cell identifier (e.g., E-CGI1) of the target cell (e.g., Cell_b) and may also include mobility related information. In one example embodiment, the source cell may also include its global cell identifier (e.g., E-CGI3) in the handover command message provided to the UE.

At some time (e.g., Time (1)) after the handover, the measurement reporting module 80 of the UE may detect a Radio Link Failure with the target cell (e.g., Cell_b). In this regard, the managing reporting module 80 of the UE may make a first attempt to establish a connection with another cell (e.g., Cell_c). In response to the first attempt to establish the connection with the cell, the managing reporting module 80 of the UE 50 may subsequently determine that the connection establishment with this cell (e.g., Cell_c) may be successful. Subsequently, the measurement reporting module 80 may report the Radio Link Failure to the corresponding cell (e.g., Cell_c or another cell (e.g., Cell_d) in which it established a connection. The Radio Link Failure report may include data indicating the cell (e.g., Cell_b) where the Radio Link Failure occurred, cell (e.g., Cell_a) where the last successful handover was initiated, cell (e.g., Cell_c) in which the UE 50 first made an attempt to establish connection, Time(1) which is the time since the last successful handover to the connection failure, and/or other radio measurement results.

The example embodiment of FIG. 5B may relate to a handover failure. In this regard, a source cell (e.g., Cell_a) may send a handover command message to a UE in order to handover the UE from the source cell to the target cell (e.g., Cell_b). The source cell may include one or more global cell identifiers (e.g., E-CGI1, PCI1) of the target cell in the handover command message along with mobility related information. At some time (e.g., Time(1)) after receipt of the handover command message, the managing reporting module 80 of the UE may determine that the handover failed. In this regard, the UE may make a first attempt to establish a connection with another cell (e.g., Cell_c). Subsequently, the managing reporting module 80 of the UE may determine that the connection with the cell (e.g., Cell c) is successful. Thereafter, the managing reporting module 80 of the UE may provide a handover failure report to the cell (e.g., Cell_c or another cell) in which it established a connection. The handover failure report may include data specifying the cell (e.g. Cell_a) where the handover was initiated, the cell (e.g., Cell_b) in which the handover failed, the cell (e.g. Cell_c) in which the UE 50 first made an attempt to establish connection, Time(1) which is the time since the reception of the handover command message to the connection failure, and/or other radio measurement results.

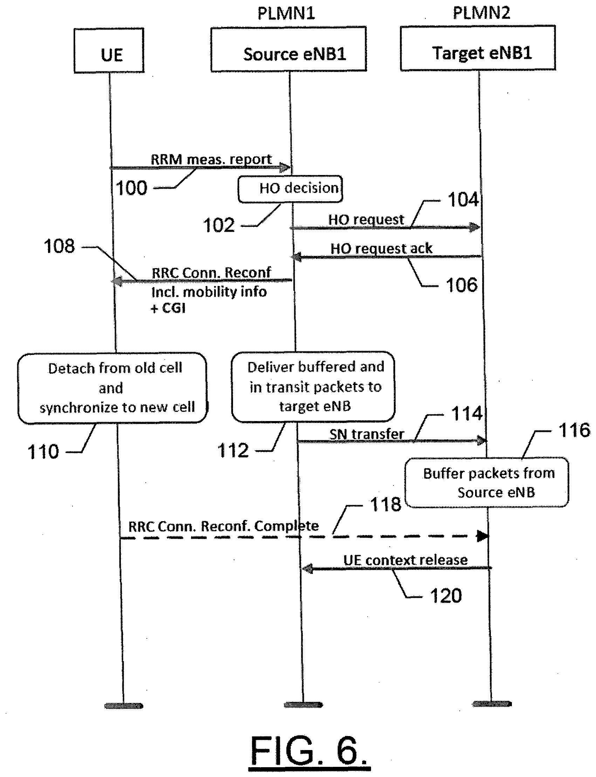

FIG. 6 illustrates a control flow diagram showing an example of signaling that may be exchanged in the performance of one example embodiment. As shown in FIG. 6, the UE 50 may initially be in communication with a first eNB (e.g., source eNB1 (e.g., eNB 52)) that is associated with a first PLMN (e.g., PLMN1). The UE 50 may already be configured by source eNB1 to provide measurement reports to source eNB 1. Thus, an MDT log may already be available to provide measurement reports as indicated at operation 100. At operation 102, a handover decision may be made (for any reason) by the source eNB1 to handover the UE 50 to a second eNB (e.g., target eNB1 (e.g., eNB 53)) that is associated with a second PLMN (e.g., PLMN2).

Responsive to the handover decision, source eNB1 may provide a handover request to target eNB1, at operation 104. At operation 106, the handover request may then be acknowledged by the target eNB1. At operation 108, a handover command message such as, for example, a RRC message including mobility information (e.g., RRCConnectionReconfiguration message) may then be provided to the UE 50 by the source eNB1. The handover command message may include a global cell identifier (e.g., CGI, E-CGI, etc.) corresponding to the target eNB1. The source eNB1 may obtain the global cell identifier of the target eNB1 from the target eNB1 via an X2 interface or an S1 interface based on communications between the source eNB1 and target eNB1 regarding neighbor relations, or the global cell identifiers may be distributed by the network management system when configuring the radio network nodes. At operation 110, the UE 50 may then detach from the originating cell and synchronize to the target cell. Buffered and in transit packets may then be transferred by the source eNB1 to the target eNB1 as shown at operations 112 and 114. At operation 116, packets received from the source eNB1 may then be buffered by target eNB1 as needed. Optionally, at operation 118, the UE 50 may send a confirmation message (e.g., a RRCConnectionReconfigurationComplete message) to the target eNB1. The confirmation message may include data indicating that a RRC connection, which may have been requested in the handover command message, is complete. The confirmation message (e.g., RRCConnectionReconfigurationComplete message) may include an indication of the availability of logged MDT measurement data. At operation 120, a UE context release may be provided from target eNB1 to source eNB1. In this regard, the source eNB1 may release the connection with the UE 50 such that the target eNB1 maintains the connection with the UE 50. It should be pointed out that in an alternative example embodiment, in an instance which the confirmation message (e.g., of operation 118) is not generated and sent to the target eNB 1 within a predetermined time period, the user terminal may determine that the handover failed.

By receiving and detecting the global cell identifier in the handover command message, the managing reporting module 80 of the UE 50 may not need to decode system information broadcast from the target cell in order to determine the global cell identifier of the target cell. In this regard, the managing reporting module 80 of the UE 50 may more efficiently and reliably generate RLF reports in instances in which an RLF may occur after a handover attempt since the UE 50 may determine the identity and location of the target cell from the global cell identifier provided to the UE 50 from the source eNB1.

Additionally, the managing reporting module 80 of the UE 50 may more efficiently and reliably generate a handover failure report(s) in an instance in which an attempt of the source eNB1 to handover the UE 50 to the target eNB1 may fail. The UE 50 may more efficiently and reliably generate a handover failure report(s) in this instance since the UE 50 may determine the identity of the target cell from the source eNB 1, via the handover command message. As such, the measurement reporting module 80 may not need to determine the identity of the target cell by decoding system parameters broadcast from the target cell in order to determine the identity of the target cell.

Furthermore, since the UE 50 may analyze data associated with the global cell identifier to determine the identity of the target cell, the measurement reporting module 80 of the UE 50 may be configured to analyze data associated with the global cell identifier and identify the PLMN ID of PLMN2. In this regard, the UE 50 may indicate to the PLMN2 and/or an eNB (e.g., eNB 53) of target eNB1 that logged MDT measurement data is available. Upon receipt of a request from the PLMN2 and/or an eNB (e.g., eNB 53) for the logged MDT measurement data, the measurement reporting module 80 of UE 50 may send the logged MDT measurement data to the PLMN2 and/or an eNB (e.g., eNB 53). As such, the problem associated with determining the identity of a PLMN based on decoding system parameters broadcast by the target cell may be alleviated by an example embodiment of the invention.

Although the example above may relate to an application of an example embodiment pertaining to E-UTRAN, other example embodiments could be practiced in similar fashion with respect to UTRAN or even other networks.

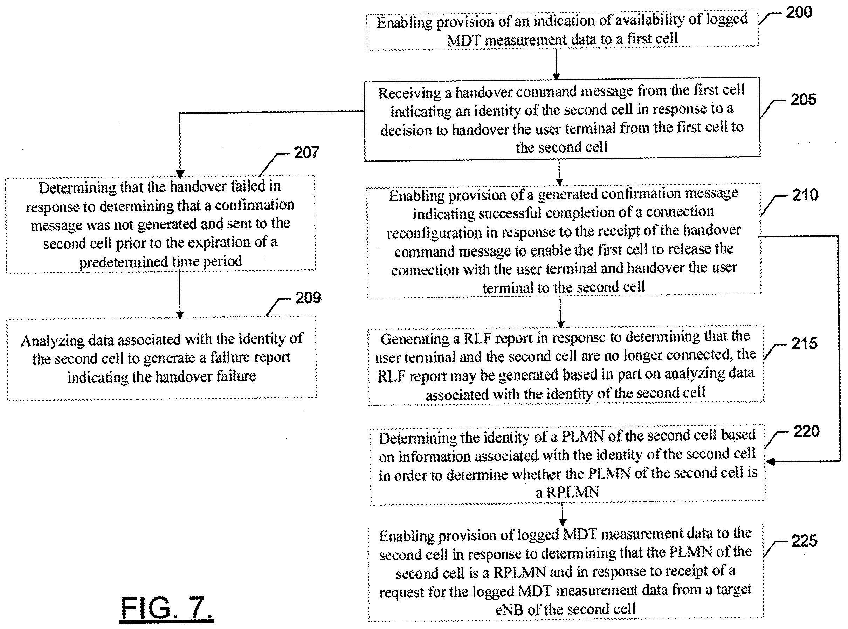

FIG. 7 is a flowchart of a method and program product according to an example embodiment of the invention. Optionally, at operation 200, a user terminal (e.g., UE 50) may enable provision of an indication of availability of logged MDT measurement data to a first cell (e.g., a source cell). At operation 205, a user terminal (e.g., UE 50) may receive a handover command message (e.g., RRCConnectionReconfiguration message) from the first cell (e.g., from an originating eNB (e.g., eNB 52) of the source cell) indicating an identity of a second cell (e.g., a target cell) in response to a decision to handover the user terminal from the first cell to the second cell. The first cell may be associated with a first PLMN and the second cell may be associated with a second PLMN. The identity of the second cell may correspond to a global cell identifier (e.g., CGI, E-CGI, etc.) that may identify the second cell.

Optionally, at operation 207, a user terminal (e.g., UE 50) may determine that the handover failed in response to determining that a confirmation message (e.g., RRCConnectionReconfigurationComplete message) was not generated and was not sent to the second cell (e.g., target cell) prior to the expiration of a predetermined time period (e.g., handover time period). Optionally, at operation 209, the user terminal (e.g., UE 50) may analyze data associated with the identity of the second cell to generate a failure report indicating the handover failure. The handover failure report may, but need not, be included in a RLF report. The handover failure report may be provided to the second cell (e.g., target cell). In an example embodiment, the handover failure report may be provided to the second cell in response to receipt of a request from an eNB (e.g., target eNB 53) of the second cell.

Optionally, at operation 210, a user terminal (e.g., UE 50) may enable provision of a generated confirmation message (e.g., RRCConnectionReconfigurationComplete message) indicating successful completion of a connection reconfiguration in response to receipt of the handover command message. The generated confirmation message may be sent to the second cell (e.g., target cell) to enable the first cell to release the connection with the user terminal and handover the user terminal to the second cell. Optionally, at operation 215, a device (e.g., measurement reporting module 80) may generate a RLF report in response to determining that a user terminal (e.g., UE 50) and the second cell are no longer connected (e.g., due to a communication failure). The RLF report may be generated based in part on analyzing data associated with the identity of the second cell. In an example embodiment, the device may provide the RLF report to the second cell in response to receipt of a request by an eNB (e.g., target eNB 53) of the second cell.

Optionally, at operation 220, a user terminal (e.g., UE 50) may determine the identity of a PLMN of the second cell based in part on information (e.g., a PLMN ID) associated with the identity (e.g., a CGI, E-CGI) of the second cell in order to determine whether the PLMN of the second cell is a registered PLMN (RPLMN). Optionally, at operation 225, a user terminal (e.g., UE 50) may enable provision of logged MDT measurement data to the second cell in response to determining that the PLMN of the second cell is a RPLMN and in response to receipt of a request for the logged MDT measurement data from a target eNB (e.g., target eNB 53) of the second cell. In an example embodiment, the user terminal may determine that the PLMN of the second cell is a RPLMN based in part on determining that a PLMN ID associated with the PLMN of the second cell corresponds to a PLMN ID that may be included in a list identifying one or more registered PLMNs.

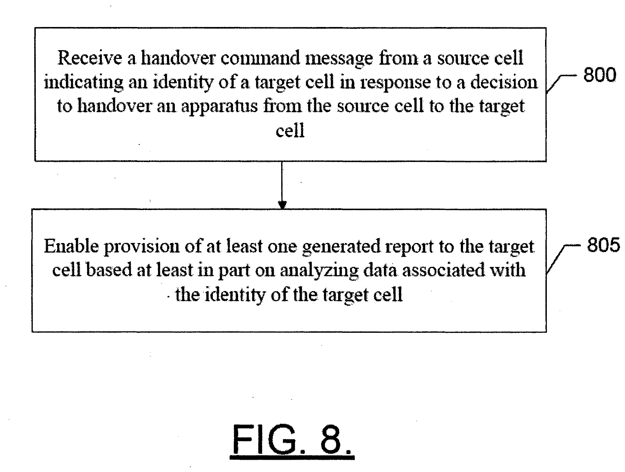

Referring now to FIG. 8, a flowchart of a method and program product for facilitating management of measurement and/or failure reporting according to an example embodiment of the invention is provided. At operation 800, an apparatus (e.g., UE 50) may receive a handover command message (e.g., RRCConnectionReconfiguration message) from a source cell (e.g., source cell of originating eNB 52) indicating an identity of a target cell (e.g., target cell of target eNB 53) in response to a decision to handover the apparatus from the source cell to the target cell. At operation 805, an apparatus (e.g., UE 50) may enable provision of at least one generated report (e.g., MDT measurement report(s), RLF report(s), Handover failure report(s), etc.) to the target cell based at least in part on analyzing data associated with the identity (e.g., CGI, E-CGI, etc.) of the target cell.

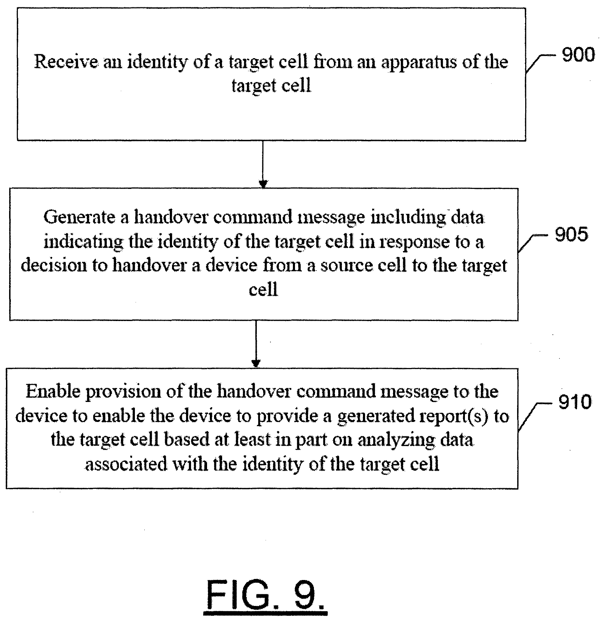

Referring now to FIG. 9, a flowchart of a method and program product for facilitating management of measurement and/or failure reporting according to an example embodiment of the invention is provided. At operation 900, a first apparatus (e.g., eNB 52), of a source cell, may receive an identity of a target cell from a second apparatus (e.g., eNB 53) of the target cell. At operation 905, the first apparatus may generate a handover command message including data indicating the identity (e.g., CGI, E-CGI, etc.) of the target cell in response to a decision to handover a device (e.g., UE 50) from the source cell to the target cell.

At operation 910, the first apparatus (e.g., eNB 52) may enable provision of the handover command message to the device to (e.g., UE 50) enable the device to provide one or more generated reports to the target cell based at least in part on analyzing data associated with the identity of the target cell.

It should be pointed out that FIGS. 6, 7, 8 and 9 are flowcharts of a system, method and computer program product according to an example embodiment of the invention. It will be understood that each block of the flowcharts, and combinations of blocks in the flowcharts, can be implemented by various means, such as hardware, firmware, and/or a computer program product including one or more computer program instructions. For example, one or more of the procedures described above may be embodied by computer program instructions. In this regard, in an example embodiment, the computer program instructions which embody the procedures described above are stored by a memory device (e.g., memory device 76, memory 76') and executed by a processor (e.g., processor 70, processor 70', measurement reporting module 80, measurement reporting configuration manager 82). As will be appreciated, any such computer program instructions may be loaded onto a computer or other programmable apparatus (e.g., hardware) to produce a machine, such that the instructions which execute on the computer or other programmable apparatus cause the functions specified in the blocks of the flowcharts to be implemented. In one embodiment, the computer program instructions are stored in a computer-readable memory that can direct a computer or other programmable apparatus to function in a particular manner, such that the instructions stored in the computer-readable memory produce an article of manufacture including instructions which implement the function(s) specified in the blocks of the flowcharts. The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the blocks of the flowcharts.

Accordingly, blocks of the flowcharts support combinations of means for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

In an example embodiment, an apparatus for performing the methods of FIGS. 6, 7, 8 and 9 above may comprise a processor (e.g., the processor 70, processor 70', measurement reporting module 80, measurement reporting configuration manager 82) configured to perform some or each of the operations (100 - 120, 200 - 225, 800 - 805 and 900 - 910) described above. The processor may, for example, be configured to perform the operations (100 - 120, 200 - 225, 800 - 805 and 900 - 910) by performing hardware implemented logical functions, executing stored instructions, or executing algorithms for performing each of the operations. Alternatively, the apparatus may comprise means for performing each of the operations described above. In this regard, according to an example embodiment, examples of means for performing operations (100 - 120, 200 - 225, 800 - 805 and 900 - 910) may comprise, for example, the processor 70 (e.g., as means for performing any of the operations described above), the processor 70', the measurement reporting module 80, the measurement reporting configuration manager 82 and/or a device or circuit for executing instructions or executing an algorithm for processing information as described above.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method comprising:
receiving (800), by a user equipment, a handover command message, from a source cell, the handover command message comprising a cell global identifier of a target cell in response to a decision to handover the user equipment from the source cell to the target cell; and
enabling (805), by the user equipment, provision of at least one generated report to the target cell based in part on analyzing data associated with the cell global identifier of the target cell.

2. The method of claim 1, further comprising:
detecting a failure in connectivity with the target cell after a successful handover of the user equipment from the source cell to the target cell;
establishing a connection with a different cell in response to the failure; and
enabling provision of an indication of the failure to the different cell in response to the established connection, the indication of the failure comprises data identifying the target cell in which the failure occurred, the data identifying the target cell being determined based at least in part on analyzing the cell global identifier of the target cell in the received handover command message.

3. The method of claim 1, further comprising:
determining that the handover failed at a time subsequent to receiving the handover command message;
establishing a connection with a different cell in response to determining that the handover failed; and
enabling provision of an indication, specifying the failure of the handover, to the different cell in response to the established connection, the indication comprising data identifying that the handover failed in the target cell, the data identifying the target cell being determined based at least in part on analyzing the cell global identifier of the target cell in the received handover command message.

4. The method of claim 1, wherein the handover command message further comprises a location of the target cell,
and wherein the method further comprises:
analyzing information associated with the cell global identifier of the received handover command message to identify a public land mobile network of the target cell in response to determining that the handover is successfully completed; and
directing sending of an indication of availability of one or more items of minimization of drive test measurement data to the target cell, the items of minimization of drive test measurement data having been previously obtained in the source cell.

5. A user equipment comprising:
means for receiving (800) a handover command message, from a source cell, the handover control message comprising a cell global identifier of a target cell in response to a decision to handover the user equipment from the source cell to the target cell; and
means for enabling (805) provision of at least one generated report to the target cell based at least in part on analyzing data associated with the cell global identifier of the target cell.

6. The user equipment of claim 5, wherein the handover control message comprises a location of the target cell.

7. The user equipment of claim 5, further comprising:
means for detecting a failure in connectivity with the target cell after a successful handover of the user equipment from the source cell to the target cell;
means for establishing a connection with a different cell in response to the failure; and
means for enabling provision of an indication of the failure to the different cell in response to the established connection, the indication of the failure comprising data identifying the target cell in which the failure occurred and the data identifying the target cell being determined based at least in part on analyzing the cell global identifier of the target cell in the received handover command message.

8. The user equipment of claim 5, further comprising:
means for determining that the handover failed at a time subsequent to receiving the handover command message;
means for establishing a connection with a different cell in response to determining that the handover failed; and
means for enabling provision of an indication, specifying the failure of the handover, to the different cell in response to the established connection, the indication comprising data identifying that the handover failed in the target cell, the data identifying the target cell being determined based at least in part on analyzing the cell global identifier of the target cell in the received handover command message.

9. The user equipment of claim 6, further comprising:
means for analyzing information associated with the cell global identifier of the received handover command message to identify a public land mobile network of the target cell in response to determining that the handover is successfully completed; and
means for directing sending of an indication of availability of one or more items of minimization of drive test measurement data to the target cell, the items of minimization of drive test measurement data having been previously obtained in the source cell.

10. A method comprising:
receiving (900), by a source cell, an identity of a target cell from the target cell;
generating (905), by the source cell, a handover command message comprising a cell global identifier of the target cell in response to a decision to handover a user equipment from a source cell to the target cell; and
enabling (910), by the source cell, provision of the handover command message to the user equipment to enable the user equipment to provide at least one generated report to the target cell based at least in part on analyzing data associated with the cell global identifier of the target cell.

11. The method of claim 10, wherein prior to receiving the identity of the target cell, the method further comprises:
directing sending of a generated handover request to the target cell, the handover request comprising information requesting handover of the user equipment from the source cell to the target cell.

12. A source cell comprising:
means for receiving (900) an identity of a target cell from another apparatus of the target cell;
means for generating (905) a handover command message comprising a cell global identifier of the target cell in response to a decision to handover a user equipment from a source cell to the target cell; and
means for enabling (910) provision of the handover command message to the device to enable the device to provide at least one generated report to the target cell based at least in part on analyzing data associated with the cell global identifier of the target cell.

13. The source cell of claim 12, further comprising means for directing sending of a generated handover request to the target cell prior to receive the identity of the target cell, the handover request comprising information requesting handover of the user equipment from the source cell to the target cell.

14. The source cell of claim 12, wherein
the means for receiving the identity are configured to receive the identity by receiving the identity from the target cell during one or more neighbor relation communications between the source cell and the target cell.

15. A computer program product embodied in a computer-readable medium, comprising computer code for causing, when the computer program is run on a programmable apparatus, performance of a method according to at least one of claims 1 - 4 or 10 - 11.

## Patentansprüche

1. Verfahren, umfassend:
- Empfangen (800) einer Übergabebefehlsnachricht von einer Quellzelle durch ein Benutzergerät, wobei die Übergabebefehlsnachricht einen globalen Zellidentifikator einer Zielzelle umfasst, in Reaktion auf eine Entscheidung zum Übergeben des Benutzergeräts von der Quellzelle an die Zielzelle; und
Ermöglichen (805) der Bereitstellung von mindestens einem generierten Bericht an die Zielzelle durch das Benutzergerät, der teilweise auf Analysieren von Daten basiert, die mit dem globalen Zellidentifikator der Zielzelle zusammenhängen.

2. Verfahren nach Anspruch 1, ferner umfassend:
Detektieren eines Fehlschlags der Verbindungsfähigkeit mit der Zielzelle nach einer erfolgreichen Übergabe des Benutzergeräts von der Quellzelle an die Zielzelle;
Aufbauen einer Verbindung mit einer anderen Zelle in Reaktion auf den Fehlschlag; und
Ermöglichen der Bereitstellung einer Angabe des Fehlschlags an die andere Zelle in Reaktion auf die aufgebaute Verbindung, wobei die Angabe des Fehlschlags Daten umfasst, die die Zielzelle identifizieren, in der der Fehlschlag stattgefunden hat, wobei die Daten, welche die Zielzelle identifizieren, mindestens teilweise basierend auf Analysieren des globalen Zellidentifikators der Zielzelle in der empfangenen Übergabebefehlsnachricht ermittelt werden.

3. Verfahren nach Anspruch 1, ferner umfassend:
Ermitteln, dass die Übergabe fehlgeschlagen ist, zu einer Zeit nach dem Empfangen der Übergabebefehlsnachricht;
Aufbauen einer Verbindung mit einer anderen Zelle in Reaktion auf das Ermitteln, dass die Übergabe fehlgeschlagen ist; und
Ermöglichen der Bereitstellung einer Angabe, die den Fehlschlag der Übergabe detaillierter aufführt, an die andere Zelle in Reaktion auf die aufgebaute Verbindung, wobei die Angabe Daten umfasst, die identifizieren, dass die Übergabe in der Zielzelle fehlgeschlagen ist, wobei die Daten, welche die Zielzelle identifizieren, mindestens teilweise basierend auf Analysieren des globalen Zellidentifikators der Zielzelle in der empfangenen Übergabebefehlsnachricht ermittelt werden.

4. Verfahren nach Anspruch 1, wobei die Übergabebefehlsnachricht des Weiteren einen Ort der Zielzelle umfasst,
und wobei das Verfahren des Weiteren umfasst:
Analysieren von Informationen, die mit dem globalen Zellidentifikator der empfangenen Übergabebefehlsnachricht zusammenhängen, um ein öffentliches landgestütztes Mobilfunknetz (PLMN) der Zielzelle in Reaktion auf die Ermittlung zu identifizieren, dass die Übergabe erfolgreich abgeschlossen wurde; und
Anleiten des Sendens einer Angabe der Verfügbarkeit von einem oder mehreren Punkten zur Minimierung von Fahrtestmessdaten an die Zielzelle, wobei die Punkte zur Minimierung der Fahrtestmessdaten zuvor in der Quellzelle erhalten wurden.

5. Benutzergerät, umfassend:
Mittel zum Empfangen (800) einer Übergabebefehlsnachricht von einer Quellzelle, wobei die Übergabesteuerungsnachricht einen globalen Zellidentifikator einer Zielzelle umfasst, in Reaktion auf eine Entscheidung zum Übergeben des Benutzergeräts von der Quellzelle an die Zielzelle; und
Mittel zum Ermöglichen (805) der Bereitstellung von mindestens einem generierten Bericht an die Zielzelle, der mindestens teilweise auf Analysieren von Daten basiert, die mit dem globalen Zellidentifikator der Zielzelle zusammenhängen.

6. Benutzergerät nach Anspruch 5, wobei die Übergabesteuerungsnachricht des Weiteren einen Ort der Zielzelle umfasst,

7. Benutzergerät nach Anspruch 5, des Weiteren umfassend:
Mittel zum Detektieren eines Fehlschlags der Verbindungsfähigkeit mit der Zielzelle nach einer erfolgreichen Übergabe des Benutzergeräts von der Quellzelle an die Zielzelle;
Mittel zum Aufbauen einer Verbindung mit einer anderen Zelle in Reaktion auf den Fehlschlag; und
Mittel zum Ermöglichen der Bereitstellung einer Angabe des Fehlschlags an die andere Zelle in Reaktion auf die aufgebaute Verbindung, wobei die Angabe des Fehlschlags Daten umfasst, die die Zielzelle identifizieren, in der der Fehlschlag stattgefunden hat, und wobei die Daten, welche die Zielzelle identifizieren, mindestens teilweise basierend auf Analysieren des globalen Zellidentifikators der Zielzelle in der empfangenen Übergabebefehlsnachricht ermittelt werden.

8. Benutzergerät nach Anspruch 5, des Weiteren umfassend:
Mittel zum Ermitteln, dass die Übergabe fehlgeschlagen ist, zu einer Zeit nach dem Empfangen der Übergabebefehlsnachricht;
Mittel zum Aufbauen einer Verbindung mit einer anderen Zelle in Reaktion auf das Ermitteln, dass die Übergabe fehlgeschlagen ist; und
Mittel zum Ermöglichen der Bereitstellung einer Angabe, die den Fehlschlag der Übergabe detaillierter aufführt, an die andere Zelle in Reaktion auf die aufgebaute Verbindung, wobei die Angabe Daten umfasst, die identifizieren, dass die Übergabe in die Zielzelle fehlgeschlagen ist,
wobei die Daten, welche die Zielzelle identifizieren, mindestens teilweise basierend auf Analysieren des globalen Zellidentifikators der Zielzelle in der empfangenen Übergabebefehlsnachricht ermittelt werden.

9. Benutzergerät nach Anspruch 6, des Weiteren umfassend:
Mittel zum Analysieren von Informationen, die mit dem globalen Zellidentifikator der empfangenen Übergabebefehlsnachricht zusammenhängen, um ein öffentliches landgestütztes Mobilfunknetz (PLMN) der Zielzelle in Reaktion auf die Ermittlung zu identifizieren, dass die Übergabe erfolgreich abgeschlossen wurde; und
Mittel zum Anleiten des Sendens einer Angabe der Verfügbarkeit von einem oder mehreren Punkten zur Minimierung von Fahrtestmessdaten an die Zielzelle, wobei die Punkte zur Minimierung von Fahrtestmessdaten zuvor in der Quellzelle erhalten wurden.

10. Verfahren, umfassend:
Empfangen (900) einer Identität einer Zielzelle von der Zielzelle durch eine Quellzelle;
Generieren (905) einer Übergabebefehlsnachricht, welche einen globalen Zellidentifikator der Zielzelle umfasst, durch die Quellzelle in Reaktion auf eine Entscheidung zum Übergeben eines Benutzergeräts von der Quellzelle an die Zielzelle; und
Ermöglichen (910) der Bereitstellung der Übergabebefehlsnachricht an das Benutzergerät durch die Quellzelle, um es dem Benutzergerät zu ermöglichen, der Zielzelle mindestens einen generierten Bericht bereitzustellen, der mindestens teilweise auf Analysieren von Daten basiert, die mit dem globalen Zellidentifikator der Zielzelle zusammenhängen.

11. Verfahren nach Anspruch 10, wobei das Verfahren vor dem Empfangen der Identität der Zielzelle des Weiteren umfasst:
- Anleiten des Sendens einer generierten Übergabeanforderung an die Zielzelle, wobei die Übergabeanforderung Informationen umfasst, die Übergabe des Benutzergeräts von der Quellzelle an die Zielzelle anfordern.

12. Quellzelle, umfassend:
Mittel zum Empfangen (900) der Identität einer Zielzelle von einer anderen Vorrichtung der Zielzelle;
Mittel zum Generieren (905) einer Übergabebefehlsnachricht, welche einen globalen Zellidentifikator der Zielzelle umfasst, in Reaktion auf eine Entscheidung zum Übergeben eines Benutzergeräts von der Quellzelle an die Zielzelle; und
Mittel zum Ermöglichen (910) der Bereitstellung der Übergabebefehlsnachricht an das Gerät, um es dem Gerät zu ermöglichen, der Zielzelle mindestens einen generierten Bericht bereitzustellen, der mindestens teilweise auf Analysieren von Daten basiert, die mit dem globalen Zellidentifikator der Zielzelle zusammenhängen.

13. Quellzelle nach Anspruch 12, des Weiteren umfassend Mittel zum Anleiten des Sendens einer generierten Übergabeanforderung an die Zielzelle vor dem Empfangen der Identität der Zielzelle, wobei die Übergabeanforderung Informationen umfasst, die Übergeben des Benutzergeräts von der Quellzelle an die Zielzelle anfordern.

14. Quellzelle nach Anspruch 12, wobei:
die Mittel zum Empfangen der Identität konfiguriert sind, um die Identität zu empfangen, indem die Identität während einer oder mehreren Nachbarbeziehungskommunikationen zwischen der Quellzelle und der Zielzelle von der Zielzelle empfangen wird.

15. Computerprogrammprodukt, das in einem computerlesbaren Medium verkörpert ist, umfassend Computercode, um die Ausführung eines Verfahrens gemäß mindestens einem der Ansprüche 1 bis 4 oder 10 bis 11 zu bewirken, wenn das Computerprogramm auf einer programmierbaren Vorrichtung läuft.

## Revendications

1. Procédé comprenant :
la réception (800), par un équipement d'utilisateur, d'un message de commande de transfert, en provenance d'une cellule source, le message de commande de transfert comprenant un identifiant global de cellule d'une cellule cible en réponse à une décision de transférer l'équipement d'utilisateur de la cellule source à la cellule cible ; et
l'activation (805), par l'équipement d'utilisateur, de la fourniture d'au moins un rapport généré à la cellule cible sur la base, en partie, de l'analyse de données associées à l'identifiant global de cellule de la cellule cible.

2. Procédé selon la revendication 1, comprenant en outre :
la détection d'une anomalie de connectivité avec la cellule cible après un transfert satisfaisant de l'équipement d'utilisateur de la cellule source à la cellule cible ;
l'établissement d'une connexion avec une cellule différente en réponse à l'anomalie ; et
l'activation de la fourniture d'une indication de l'anomalie à la cellule différente en réponse à la connexion établie, l'indication de l'anomalie comprenant des données identifiant la cellule cible où s'est produite l'anomalie, les données identifiant la cellule cible étant déterminées sur la base, au moins en partie, de l'analyse de l'identifiant global de cellule de la cellule cible dans le message de commande de transfert reçu.

3. Procédé selon la revendication 1, comprenant en outre :
la détermination que le transfert a échoué à un moment postérieur à la réception du message de commande de transfert ;
l'établissement d'une connexion avec une cellule différente en réponse à la détermination que le transfert a échoué ; et
l'activation de la fourniture d'une indication, spécifiant l'anomalie du transfert, à la cellule différente en réponse à la connexion établie, l'indication comprenant des données identifiant que le transfert a échoué dans la cellule cible, les données identifiant la cellule cible étant déterminées sur la base, au moins en partie, de l'analyse de l'identifiant global de cellule de la cellule cible dans le message de commande de transfert reçu.

4. Procédé selon la revendication 1, dans lequel le message de commande transfert comprend en outre une localisation de la cellule cible,
et le procédé comprenant en outre :
l'analyse d'une information associée à l'identifiant global de cellule du message de commande de transfert reçu afin d'identifier un réseau mobile terrestre public de la cellule cible en réponse à la détermination que le transfert a été réalisé de manière satisfaisante ; et
la direction de l'envoi d'une indication de disponibilité à un ou plusieurs éléments de minimisation de données de mesure de test de lecteur à la cellule cible, les éléments de minimisation de données de mesure de test de lecteur ayant été précédemment obtenus dans la cellule source.

5. Équipement d'utilisateur, comprenant :
un moyen permettant de recevoir (800) un message de commande de transfert, en provenance d'une cellule source, le message de commande de transfert comprenant un identifiant global de cellule d'une cellule cible en réponse à une décision de transférer l'équipement d'utilisateur de la cellule source à la cellule cible ; et
un moyen permettant d'activer (805) la fourniture d'au moins un rapport généré à la cellule cible sur la base, au moins en partie, de l'analyse de données associées à l'identifiant global de cellule de la cellule cible.

6. Équipement d'utilisateur selon la revendication 5, dans lequel le message de commande de transfert comprend une localisation de la cellule cible.

7. Équipement d'utilisateur selon la revendication 5, comprenant en outre :
un moyen permettant de détecter une anomalie de connectivité avec la cellule cible après un transfert satisfaisant de l'équipement d'utilisateur de la cellule source à la cellule cible ;
un moyen permettant d'établir une connexion avec une cellule différente en réponse à l'anomalie ; et
un moyen permettant d'activer la fourniture d'une indication de l'anomalie à la cellule différente en réponse à la connexion établie, l'indication de l'anomalie comprenant des données identifiant la cellule cible où s'est produite l'anomalie, et les données identifiant la cellule cible étant déterminées sur la base, au moins en partie, de l'analyse de l'identifiant global de cellule de la cellule cible dans le message de commande de transfert reçu.

8. Équipement d'utilisateur selon la revendication 5, comprenant en outre :
un moyen permettant de déterminer que le transfert a échoué à un moment postérieur à la réception du message de commande de transfert ;
un moyen permettant d'établir une connexion avec une cellule différente en réponse à la détermination que le transfert a échoué ; et
un moyen permettant d'activer la fourniture d'une indication, spécifiant l'anomalie du transfert, à la cellule différente en réponse à la connexion établie, l'indication comprenant des données identifiant que le transfert a échoué dans la cellule cible, les données identifiant la cellule cible étant déterminées sur la base, au moins en partie, de l'analyse de l'identifiant global de cellule de la cellule cible dans le message de commande de transfert reçu.

9. Équipement d'utilisateur selon la revendication 6, comprenant en outre :
un moyen permettant d'analyser une information associée à l'identifiant global de cellule du message de commande de transfert reçu afin d'identifier un réseau mobile terrestre public de la cellule cible en réponse à la détermination que le transfert a été réalisé de manière satisfaisante ; et
un moyen permettant de diriger l'envoi d'une indication de disponibilité à un ou plusieurs éléments de minimisation de données de mesure de test de lecteur à la cellule cible, les éléments de minimisation de données de mesure de test de lecteur ayant été précédemment obtenus dans la cellule source.

10. Procédé comprenant :
la réception (900), par une cellule source, d'une identité d'une cellule cible en provenance d'un appareil de la cellule cible ;
la génération (905), par la cellule source, d'un message de commande de transfert comprenant un identifiant global de cellule de la cellule cible en réponse à une décision de transférer un équipement d'utilisateur d'une cellule source à la cellule cible ; et
l'activation (910), par la cellule source, de la fourniture du message de commande de transfert à l'équipement d'utilisateur pour permettre à l'équipement d'utilisateur de fournir au moins un rapport généré à la cellule cible sur la base, au moins en partie, de l'analyse de données associées à l'identifiant global de cellule de la cellule cible.

11. Procédé selon la revendication 10, le procédé comprenant en outre, avant la réception de l'identité de la cellule cible :
la direction de l'envoi d'une demande de transfert généré à la cellule cible, la demande de transfert comprenant une information demandant un transfert de l'équipement d'utilisateur de la cellule source à la cellule cible.

12. Cellule source, comprenant :
un moyen permettant de recevoir (900) une identité d'une cellule cible en provenance d'un autre appareil de la cellule cible ;
un moyen permettant de générer (905) un message de commande de transfert comprenant un identifiant global de cellule de la cellule cible en réponse à une décision de transférer un équipement d'utilisateur d'une cellule source à la cellule cible ; et
un moyen permettant d'activer (910) la fourniture du message de commande de transfert au dispositif pour permettre au dispositif de fournir au moins un rapport généré à la cellule cible sur la base, au moins en partie, de l'analyse de données associées à l'identifiant global de cellule de la cellule cible.

13. Cellule source selon la revendication 12, comprenant en outre un moyen permettant de diriger l'envoi d'une demande de transfert généré à la cellule cible avant de recevoir l'identité de la cellule cible, la demande de transfert comprenant une information demandant un transfert de l'équipement d'utilisateur de la cellule source à la cellule cible.

14. Cellule source selon la revendication 12, dans laquelle le moyen permettant de recevoir l'identité est configuré pour recevoir l'identité en recevant l'identité en provenance de la cellule cible pendant une ou plusieurs communications de relation de voisinage entre la cellule source et la cellule cible.

15. Produit de programme informatique, intégré dans un support lisible par ordinateur, comprenant un code informatique permettant, quand le programme informatique est exécuté sur un appareil programmable, de réaliser un procédé selon au moins une des revendications 1 à 4 ou 10 et 11.
